## Europäisches Patentamt
## European Patent Office
## Office européen des brevets

(19)

(11) Publication number: **0 096 199**

**A2**

(12) # EUROPEAN PATENT APPLICATION

(21) Application number: **83103799.9**

(22) Date of filing: **20.04.83**

(51) Int. Cl.³: **G 06 F 11/00**
**G 06 F 9/46**

(30) Priority: **21.06.82 US 390454**

(43) Date of publication of application:
**21.12.83 Bulletin 83/51**

(84) Designated Contracting States:
**DE FR GB**

(71) Applicant: **International Business Machines Corporation**
**Old Orchard Road**
**Armonk, N.Y. 10504(US)**

(72) Inventor: **Mellow, Clifford**
**881 Hampswood Way**
**San Jose California 95120(US)**

(72) Inventor: **Strickland, Jimmy Paul**
**18929 Alcott Way**
**Saratoga California 95070(US)**

(72) Inventor: **Sundell, Edward Erland**
**1234 Pampas Drive**
**San Jose California 95120(US)**

(74) Representative: **Lancaster, James Donald**
**IBM United Kingdom Patent Operations Hursley Park**
**Winchester Hants S021 2JN(GB)**

(54) Method and apparatus for logging journal data in a computing apparatus.

(57) Operation of a computing system including a data base and a log of changes to the data base is enhanced by enabling online access to log records stored both in direct access storage devices and archive log storage devices. Responsive to a request from a user of a log facility to store a log record, a sequential relative byte address is assigned to the log record and returned to the user, and the log record is stored in a main storage log buffer. The log buffer contents are periodically written to one of at least two data sets on direct access storage devices, and these data sets are offloaded selectively from the direct access storage device to an archive log device while writes of log buffer contents to the data set being offloaded are inhibited. An index of the log records is maintained in a boot strap data set, and includes the range of relative byte addresses of log records stored in each direct access storage device and archive device. Responsive to a request from a user of the log facility for a log record having a given relative byte address, the requested log record is obtained from the most accessible storage location referenced by the index.

## METHOD AND APPARATUS FOR LOGGING JOURNAL DATA IN A COMPUTING APPARATUS

BACKGROUND OF THE INVENTION

### Field of the Invention

This invention relates to a new system configuration and method for operating a computing apparatus. More specifically, it relates to the buffering of a journal of the creation, deletion and modification of recoverable objects including messages, data base records or tuples, and persistent systems states.

### Description of the Prior Art

In the operation of computing systems, it is the practice to provide a data base management system which operates under the operating system to manage the creation, deletion, and modification of records stored in a data base. Such data base management systems, especially those which process multiple, concurrent transactions, require a means for maintaining the integrity of the data base in spite of the possibility of 1) failure of the media upon which the data base is recorded, 2) failure of the computing system upon which the data base management system is operating, or 3) failure of one or more of the transactions to successfully complete its processing. These failures may be the result of complete loss of power to the computing systems's main storage which, because it requires power to maintain the information contained therein is volatile, and such a power loss will result in loss of knowledge by the system as to its own state and the state of the processes under its control, as well as loss of information with respect to changes being made to the data base.

This problem is commonly solved by use of a recovery log. Before data is modified, the before and after image of modified data or states is recorded in a non-volatile log media. This technique is referred to as "log write ahead". This is sometimes achieved by waiting until other activity fills log buffers which results in the write operation occurring, or by forcing a partially filled buffer to be written to non-volatile storage. In the event of a transaction failure, if the data or state has been written to the data base, the log is used to backout the modifications. In the event of a media failure, the log, in conjunction with the most recent image copy of the data, is used to forward recover the data to its last point of consistency.

In our IBM Information Management System (IMS/VS) Version 1, three different logs are used. These are the system log, the dynamic log, and the restart dataset. The IMS/VS system log is recorded on tape. It is used for data base media recovery and offline backout. This log can also be used to restart IMS/VS. The dynamic log is recorded on direct access storage device(s) (DASD). It contains the data base change information needed to backout the currently executing transactions. The restart dataset is also recorded on DASD. It contains system status information needed to restart IMS/VS. The restart dataset and dynamic log are used to perform a fast restart after most IMS/VS failures.

In the IMS/VS Version 1 logging approach, read access to the system log is used by offline utilities for data base recreate and repair operations, but is not available to the online system for online recovery operations. For this reason, information needed for online recovery operations is replicated. (An example of this is the dynamic backout data. It exists in both the system log and the dynamic log.) Further, in some system failure cases, it is not possible to reinstitute dual logging online or to restart the system without first terminating the system log from the dump data set.

There is, therefore, a need to improve system performance and throughput during online and offline recovery operations required by a data base system by providing a single set of log accessing protocols having access to both the DASD and tape logs.

The invention provides a method for operating a computing apparatus, and a computing apparatus, as specified in the appended claims.

BRIEF DESCRIPTION OF THE DRAWINGS

Figure 1 is a diagrammatic illustration of the logging apparatus of the invention, illustrating a continuous log stored in main storage output buffers, direct access storage devices, and archieval storage devices.

Figure 2 is a diagrammatic illustration of the index structure for the log apparatus of Figure 1, and Figure 3 illustrates the content of an index record.

Figure 4 is a diagrammatic illustration of the log control structure, illustrating the relationship between log manager tasks in responding to an external request for service.

Figure 5 is a diagrammatic illustration of the control structure implemented for processing a write to the log.

Figure 6 is a diagrammatic illustration of the control structure implemented for processing a read from the log.

Figure 7 is a flow chart illustrating the log read procedure.

Figure 8 is a diagrammatic illustration of log records within VSAM control intervals, showing an example of a spanned record.

Figure 9 is a diagrammatic illustration of a log record header.

DESCRIPTION OF THE PREFERRED EMBODIMENT

Reference is made to our European application number _____ for "Method and Apparatus for Logging Journal Data Using a Log Write Ahead Data Set" by Gawlick et al, (Applicants reference SA9-82-004) (US 390485 filed 21 June 1982).

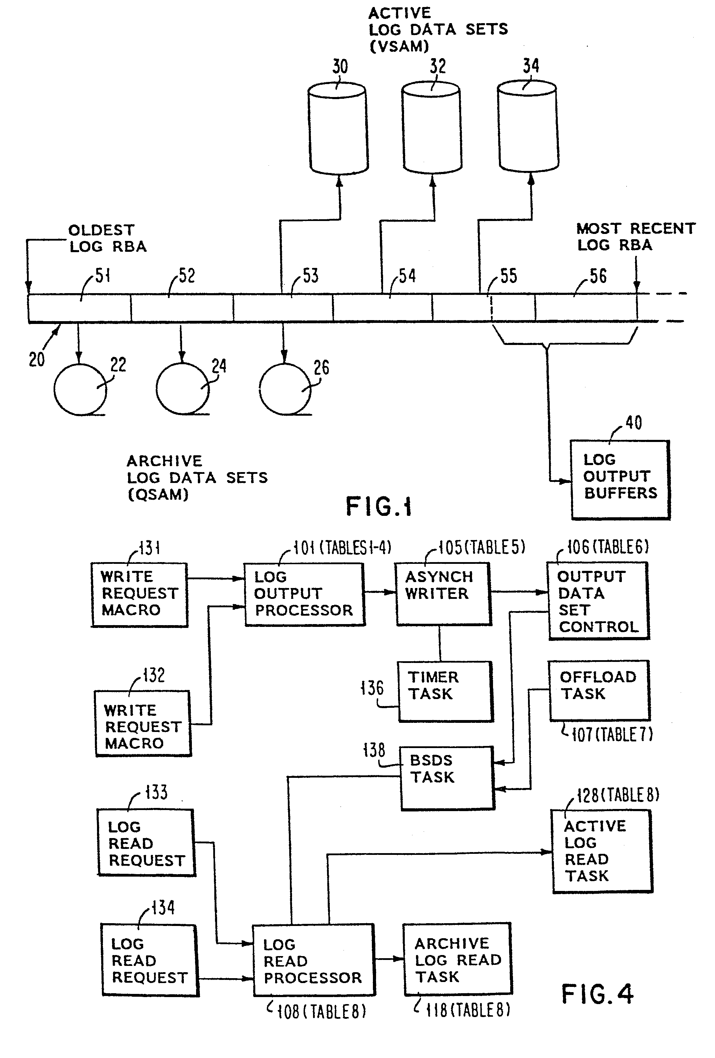

In Figure 1 of the copending Gawlick et al application there is illustrated a system environment requiring the logging of data base and other changes to a log including main storage buffers, direct access storage devices (DASD), and archival storage devices (such as tapes). The apparatus and method of the present application operates within the same environment, excluding therefrom the specific implementation of the write ahead data set (WADS), which is not the subject of this application. The computing apparatus of the invention may be a general purpose computer, or central electronic complex, such as an IBM System/360 or System/370, described in U.S. Patent 3,400,371 by G. M. Amdahl, et al, and in IBM System/370 Principles of Operation, IBM Publication GA22-7000-6.

Referring now to the figures, Figure 1 illustrates the continuous log 20 of the present invention, distributed across archive log data sets 22, 24, 26, active log data sets 30, 32, 34, and in log output buffers 40. Archive log data sets may be implemented in data sets on DASD or tape or mass storage system (MSS) devices. Active log data sets may be implemented in VSAM data sets on DASD devices. Data stored in archival and active data sets are non-volatile. Other log data is stored in volatile, main storage buffers 40. As is illustrated in Figure 1, log data sets 51-53 are stored in archive devices 22, 24, 26, respectively, and log data sets 53-55 are stored in active log devices 30, 32, 34, respectively. At any given instant, a log data set, such as 53, may reside both in active and archive devices, output buffers 40 may include log records from a data set, such as 55, which has been written in whole or in part out to an active log device 34, and also log records 56 which have not yet been written to an active log device.

Figure 1 also illustrates the extent of relative byte addresses (RBA), extending from the beginning of time (the oldest log RBA) to the most recent log RBA.

In operation, a data base system uses log 20 to record changes to data base records for use in maintaining integrity of the data base. Such integrity is maintained by 1) backing out (removing) changes made to a data base by processes that abnormally terminate, and 2) recreating data bases that are lost due to hardware recording media failures, such as DASD head crashes. The data base system also periodically writes its internal operating status to log 20 for use in restarting the data base system after either normal or abnormal termination.

In building log 20, log records are first placed in log output buffers 40, and periodically written out to DASD 30, 32, 34 from buffers 40. Log records in active log data sets 30-34 are available for fast access during online backout and data base system restart operations.

In order to support the large volume of log data needed for data base media recovery operations, the log data is periodically copied (offloaded) from DASD 30-34 to DASD or tape or a mass storage subsystem (MSS) 22-26. Once a data set, such as 53, is offloaded from DASD 30, the DASD space is available for recording new log data, such as 56.

The relative byte address (RBA) is provided for addressing all log data. The RBA provides a unique description allowing a single protocol for reading any log data independently of the age or location of the data. With an RBA field of 48 bits, for example, associated with each log 20 record, the recovery log manager component (to be described hereafter) presents to the rest of the data base system a logical log which appears to be a $2^{48}$ byte sequentially addressable space. In time sequence, a logged event occurred first if its log record has a lower 48 bit number. Only the recovery log manager component need be aware of the physical location, or residence on log devices 22-26, 30-34, and all other components need only use a 48 bit number to identify the log record desired.

Assuming, for example, 100 transactions per second with 1000 bytes of log information per transaction and $3.2 \times 10^7$ seconds per year, there will be created $3.2 \times 10^{12}$ bytes of log per year. Under these circumstances, it will take about 90 years to fill log 20.

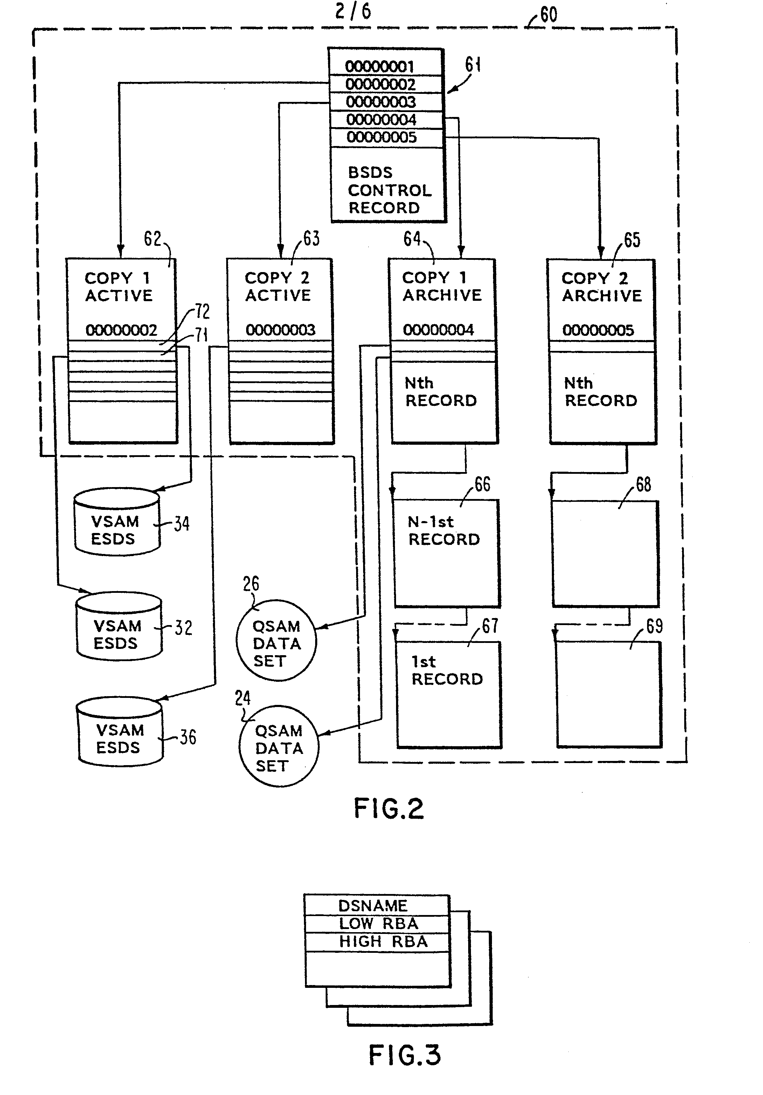

Referring now to Figure 2, a description will be given of boot strap data set (BSDS) 60, and the index which it contains of log 20. Herein, BSDS 60 includes BSDS control record 61, copy 1 active index record 62, copy 2 active index record 63, copy 1 archive index record 64, and copy 2 archive index record 65. Herein, BSDS control record 61 is a Virtual Storage Access Method (VSAM) Key Sequenced Data Set (KSDS) record having a key of 00000001 (hexadecimal notation). BSDS control record 61 includes pointers, in the form of data set record identifiers (VSAM keys) 00000002, 00000003, 00000004, and 00000005 for active and archive index records 62-65, respectively. Copy 1 active index record 62 contains a set of entries, with each entry containing, as is illustrated in Figure 3, the data set name corresponding to the entry and the high and low RBA values for the log records stored in that data set. As is illustrated, the two entries 71 and 72 index the log records contained in active log data sets 32 and 34 respectively. Similarly, copy 2 active index record 63 indexes the active log data sets containing the second copy of the log, with the most recent data set residing on DASD 36. The archive log data set name may include a user supplied portion, and also identify the physical device on which it currently resides. Whereas, in general, one record 62 or 63 is sufficient to index all log data sets residing on active devices, a plurality of records 64, 66-67 is required for the first copy of the index to archive log data sets, and records 65,68-69 for the second copy. Each copy 1 archive index record 64, 66 is chained to the index record 66, 67 preceeding it in the chain. Each record 64-69 comprises a plurality of entries, with each entry identifying a log data set 22-26 and the RBA range 51-53 of log records stored in the corresponding log data set. In this example, copy 1 archive record 67 and copy 2 archive record 69 will each contain in their respective first entries the RBA range and name of an archive log data set. (Typically, BSDS 60 would contain entries for addressing log 20 data created during the period of a few weeks; log data older than that being no longer required for recovery or restart operations.)

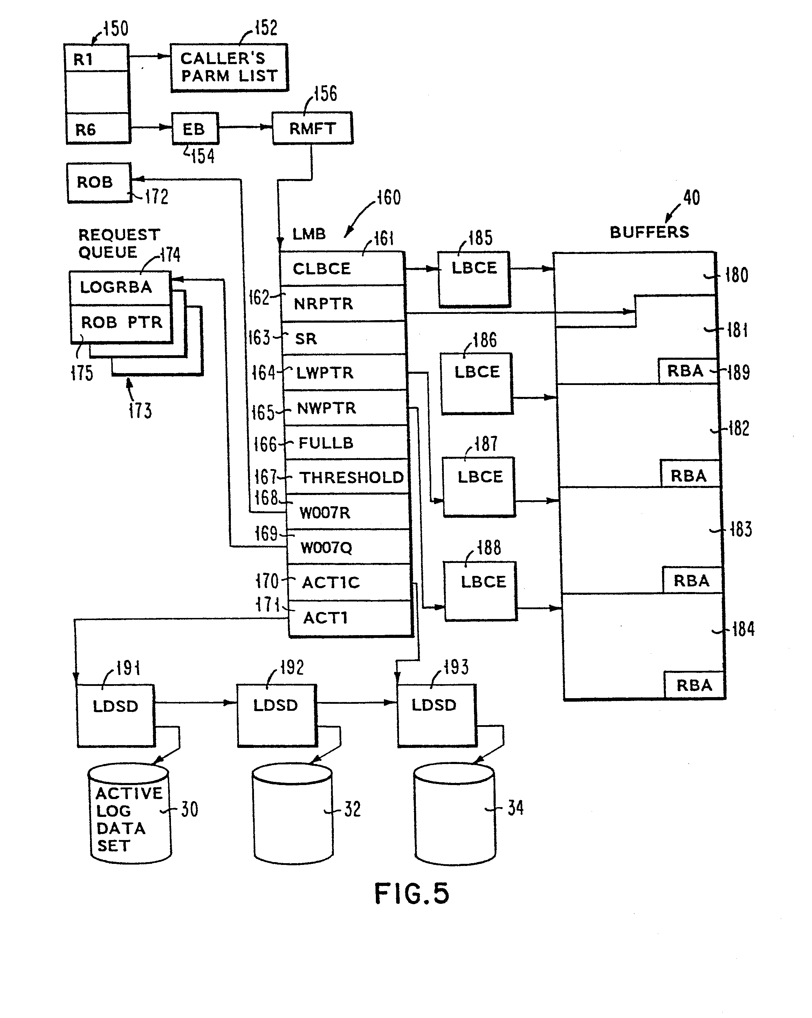

Referring now to Figure 4, a description will be given of the subcomponents included in the log manager component of the invention. These subcomponents may operate asynchronously from each other, each under control of an execution unit. The execution units can be in an active state during which the subcomponent is actually working; a wait state, in which the subcomponent is awaiting its opportunity to become active; and a suspend state, in which there is no work requiring processing.

Requests for the writing of log records are received by the log manager in the form of application or system initiated write request macros 131, 132. These requests describe the log record to be written, and are received by log output processor 101, which serializes the requests and puts the log records in buffers 40. If a predefined threshold number 167 of buffers 40 are full, log ouput processor 101 requests that asynchronous writer 105 write all filled buffers to a log data set on DASD. The operation of log output processor 101 is further described in connection with LOGWRITE Tables 1-4, and Figure 5. The LOGWRITE function of Table 1 takes a log record described by a log write parameter list and places it in the log. The log can be viewed as a continuous string of data bytes. This function places the new log record at the end of the data string, or log. Associated with the log record is a 48 bit RBA value, which is the offset from the beginning of the continuous byte string (offset = 0) to the byte position in which the first byte of this record is placed. The interface between log output processor 101 and asynchronous writer 105 is defined by the BLDREC, NEWBUF, and WRITER procedures of Tables 2-4.

Asynchronous writer 105 runs under its own execution unit. It processes a work queue whose elements indicate log output buffers 40 which need to be written to the active log data sets 30-34. Writer 105 performs the data set write operations. When its queue is empty, writer 105 suspends its execution waiting for new work request elements from output processor 101. Writer 105 is futher described in Table 5.

In the event that the system is running slowly, in the sense that requests for writing log records to log 20 are sufficiently infrequent that buffers 40 do not fill to force a request to write a buffer to active log data sets 30-34 within some reasonable period, then timer task 136 initiates a request to asynchronous writer 105 to write an incomplete buffer to an active log device. This is done to prevent an undue delay in the processing of an application program, for example, which put a log record into buffer 40 but must wait for it to be written to non-volatile storage before proceeding.

Output data set control is described further in Table 6. If asynchronous writer 105 fills a data set, it calls output data set control 106 to get the next active log output data set. Output data set control 106, in turn, calls BSDS task 138 to update the index records in BSDS 60 (see Figures 2 and 3), and advises offload task 107 that asynchronous writer 105 has switched from one active log data set 30 to another (say, 32). The "switched from" data set 30 is available for offload, which is the copying of the log data from active log data set 30 to archival media data set 26. Once the data has been copied, the active log data set 30 may be used for new log output data. The offload task 107 is further described in Table 7.

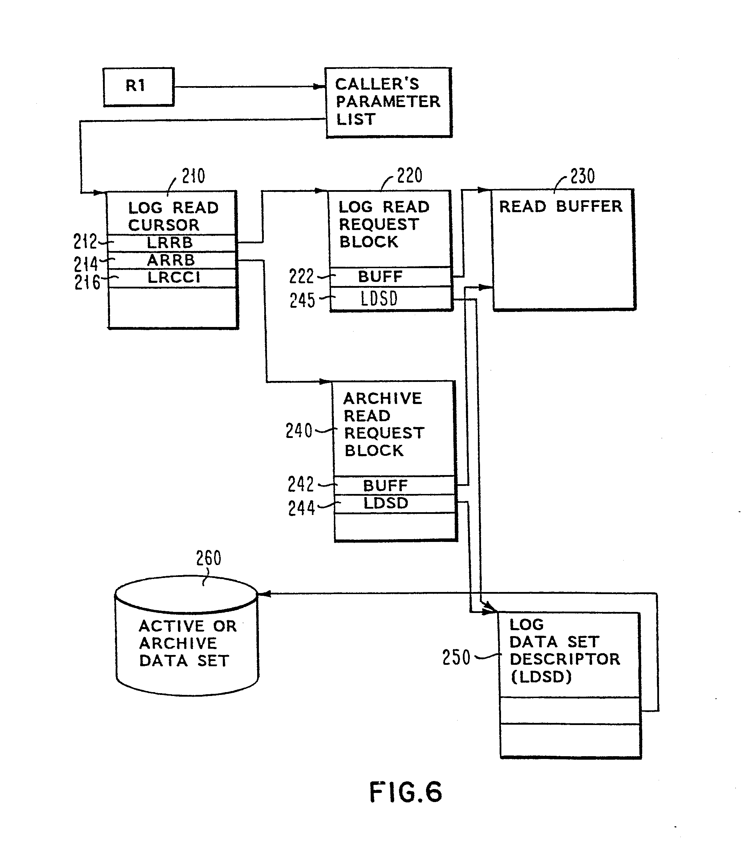

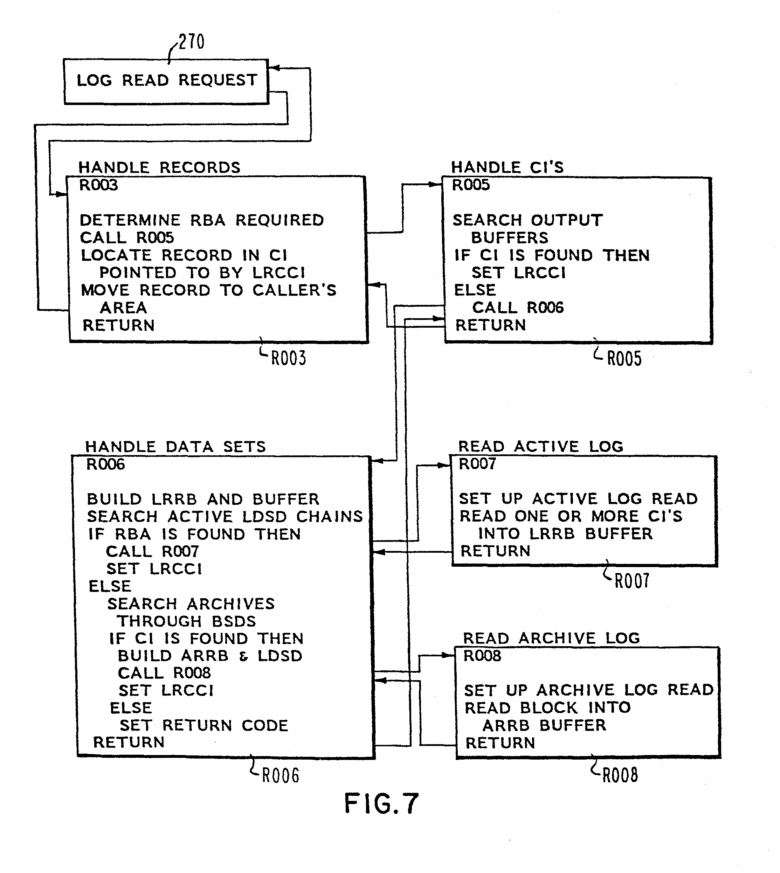

A request to read the log may be received from a log read request 133,134, via log read processor 108. Table 8 describes the operation of log read processor 108, archive log read task 118, and active log read task 128. Log read function 108, 118, 128 reads log records created by the log output processor 101. The caller specifies in log read request 133, 134 the log RBA of the desired record, and receives back a copy of the log record. Log read function 108, 118, 128 accesses the desired record from the most accessible of log output buffers 40, an active log data set 30-34, or an archive log data set 22-26, in that order. BSDS 60 contains a list of the active log and archive log data sets, and the RBA range of the data therein, and is accessed on behalf of log read processor 108 by BSDS task 138. Log read function 108, 118, 128 is described further in connection with Figures 6 and 7.

Referring now to Figure 5, the control structures implementing the log write, or log output, processor 101 of Tables 1-4 will be described. Upon initiating a call to the log output processor 101, the caller places in machine registers 150 pointer R1 to parameter list 152 describing the log record to be written to log 20, and pointer R6 to storage location EB (Execution Block) 154, thence to RMFT (Resource Manager Function Table) location 156, and thence to log manager block (LMB) 160. Log manager block 160 contains in fields 161-171 pointers and values describing and addressing the various log buffers 40, log buffer control elements (LBCE) 185-188, and log data set descriptors (LDSD) 191-193. Current LBCE field 161 points to LBCE 185, which is the control element for buffer 180, which is currently the receiver of log records. Next record pointer 162 points to the location in buffer 180 to receive the next log record, and space remaining field 163 specifies the number of bytes in unfilled portion 181 of the current output buffer 180. LBCE 186 points to log output buffer 182, an example of a buffer that is filled and has already been written. Last written pointer field 164 points to the LBCE 187 for the last buffer written to an active log data set, herein buffer 183. Next-to-write pointer 165 points to LBCE 188, which is the control element for the next buffer to be written to an active log data set, herein buffer 184. Full buffer field 166 indicates the number of full buffers 40 not yet written, herein buffer 184, or one, and threshold field 167 indicates the number of buffers which must be filled to cause write of buffers to the active log data set. W007R field 168 points to the request options block (ROB) 172 for the asynchronous writer 105, which will be posted to activate the asynchronous writer for processing the full buffers which have not yet been written. W007Q field 169 points to request queue 173, each entry of which represents a request waiting for the log to be written. LOGRBA field specifies the end RBA for which the request is waiting, and ROB pointer 175 points to the request options block for the request to be used in informing the requestor (or caller) when the request has been processed and the log record written to non-volatile storage 30-34. A chain of log data set descriptors 191-193 describes the active log data sets 30-34, with ACT1C field 170 pointing to LDSD 193 corresponding to the active log data set 34 now being written, and ACT1 field 171 pointing to the beginning of the LDSD chain.

The manner in which the control structure of Figure 5 is utilized in practicing the invention is set forth in Tables 1 through 6. The procedure for offloading active log data set 30 to archive log data set 26 is set forth in Table 7.

Referring now to Figure 6 in connection with Figure 7, a description will be given of the control structure and steps for processing a request to read a log record from log 20. A more detailed description of the log read process is provided in Tables 8A and 8B.

Log read cursor (LRC) 210 provides fields for pointers LRRB 212 to log read request block (LRRB) 220, ARRB 214 to archive read request block (ARRB) 240, and LRCCI (Log Read Cursor Control Interval Address) 216 to the location in main storage buffers 230 or 40 of the control interval containing the log record requested by the user. LRCCI 216 is set by the log read processor after the log record has been located in output buffer 40 or read into read buffer 230. Log read request block 220 contains field BUFF 222, which is set to point to read buffer 230 at the time read buffer 230 is set up because the desired log record is not found in the log output buffers 40. Archive read request block 240 includes BUFF field 242 which points to read buffer 230 and LDSD 244 which points to log data set descriptor (LDSD) 250, and is set up if the desired log record is only found in archive data set 260. If the desired log record is found in an active data set, then log data set descriptor (LDSD) 250 pointed to by LDSD field 245 is one of LDSD's 191-193, otherwise it is created by the log read processor (see block R006, Figure 7). Active or archive data set 260 is the one of data sets 22-26, 30-34 on which the desired log record is found, if it is not found in log output buffer 40.

Figure 7 sets forth the procedure for reading log 20, with handle records procedure R003, handle control interval (CI) procedure R005, and handle data sets procedure R006 corresponding to log read processor 108 in Figure 4, read active log R007 to active log read task 128, and read archive log R008 to archive log read task 118. Log read request 133 invokes the log read process of Figure 7, which returns the desired log record to the user's storage area.

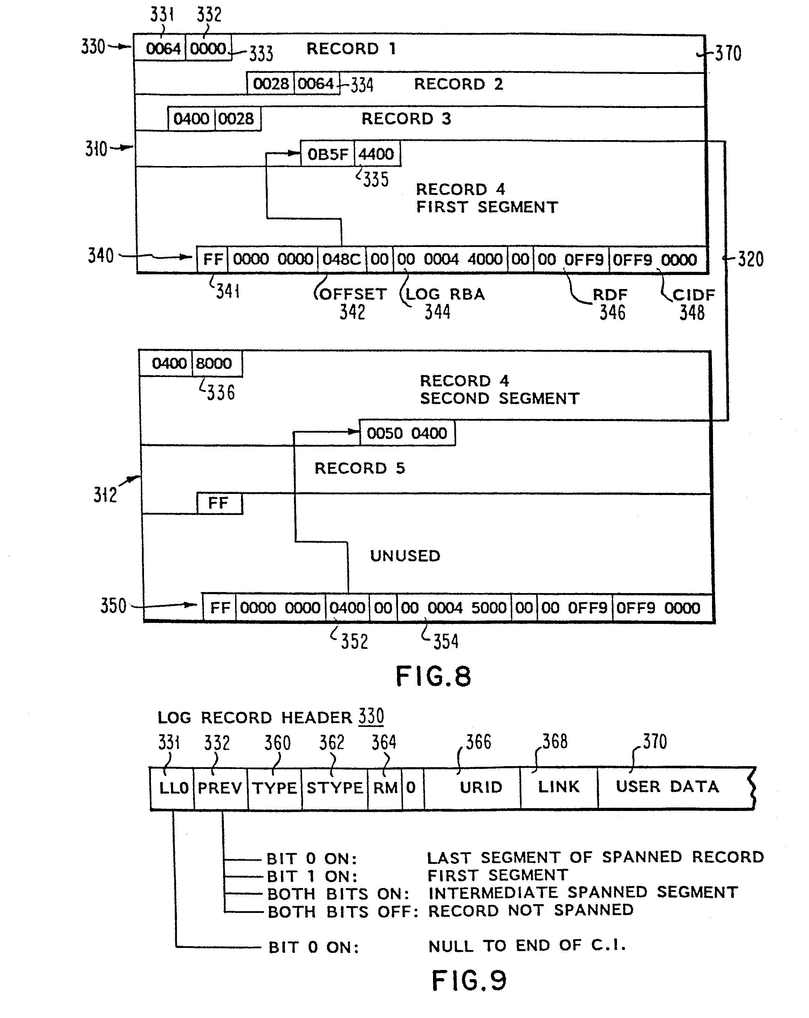

Referring next to Figures 8 and 9, a description will be given of the data structure for log records within VSAM control intervals in log output buffers 40 and active log data sets 30-34. In Figure 8 is illustrated two VSAM control intervals 310,312, each 4096 (decimal) bytes in length (in hexadecimal notation, 1000 bytes). Each record includes a header 330 and a data portion 370. In Figure 8 is illustrated fields 331 and 332 of header 330, with the other fields of the header shown in Figure 9. Records 1, 2, 3, and the first segment of record 4 are contained in control interval 310, with the second segment of record 4, and record 5 in control interval 312. Thus, record 4 spans 320 from control interval 310 into control interval 312.

Control interval 310 includes log descriptor 340, and CI 312 includes log descriptor 350. For purposes of illustration, the example log descriptor and record header values are noted in hexadecimal notation (4 bits per character, with two characters per byte). Header field 331 specifies in the last three hex digits the length of record 1, and field 332 in the last three hex digits the length of the previous record in this control interval. The first bit of field 331, if set on, indicates that the record is null to the end of the control interval. In field 331 this bit is off; however, the header of the unused portion of control interval 312 (FF) illustrates the use of the first bit (hex F is 1111 in binary, which includes a 1 in the first bit position, bit 0). The first two bits of field 332 are used in spanned records, with hex 4 in field 335 indicating the record is the first segment of a spanned record and hex 8 in field 336 indicating the record is the last segment of a spanned record.

Record descriptor field RDF 346 and control interval descriptor field 348 occupy the last 7 bytes of the control interval. Insofar as VSAM is concerned, the entire control interval is one record hex 0FF9 bytes in length with no (hex 0000) free space. (This is because the log manager is controlling the allocation and use of the space within the control interval.) Log descriptor fields 341, offset 342, and log RBA 344 are managed by the log manager. Field 341 is set to FF to flag the end of the buffer, preventing the writing of data into the log descriptor 340. Offset field 342 points to the beginning of the last record in control interval 310 to enable read backward, and is derived by summing the lengths of all preceding records in the control interval (i.e., hex 064 + 028 + 400 = 48C, the value in field 342). Log RBA field 344 gives the log RBA of the first byte of control interval 310. This field, in succeeding control interval headers, is incremented by hex 1000 (4096 bytes). Thus, the log RBA of control interval 310 is 00044000 and of control interval 312 it is 00045000. The RBA value of a log record is the RBA value of the first byte of the record: for example, the RBA value for record 3 in control interval 310 is hex 064+028+00044000 = 0004408C, the sum of fields 344 and the length of records 1 and 2.

In Figure 9 are illustrated the remaining fields of log record header 330, including type fields 360,362 for identifying the record type, resource manager identifier 364 for identifying the resource manager writing the current log record to the log, unit of recovery identifier field 366, and a link field 368. The use of fields 360-368 being outside of the scope of the present invention, will not be further described.

The method of the invention, and the manner of use of the data and control structures of Figures, is set forth in Tables 1 - 8. As will be apparent to those skilled in the art, the psuedo code of the tables may readily be coded into executable code without undue experimentation.

TABLE 1    LOGWRITE PROCEDURE

```
/=------------------------------------------------------------=/
/=  LOGWRITE PROCEDURE                                         =/
/=------------------------------------------------------------=/

        Inhibit concurrent processing of another log write
        request by obtaining the LOG WRITE LATCH exclusive.
        IF log record length > remaining space in current log buffer
            and buffer space < 256 bytes THEN
                CALL NEWBUF subroutine.
        ELSE.
        CALL BLDREC subroutine.
        Release the LOG WRITE LATCH.
        IF log write request specified FORCE THEN
            /=------------------------------------------------=/
            /= The caller's log data must be written to the log =/
            /= data set immediately.                           =/
            /=------------------------------------------------=/
            CALL WRITER subroutine.
        ELSE.
        IF log write request specified FORCE or WAIT THEN
            /=------------------------------------------------=/
            /= The caller does not want control returned until  =/
            /= the requested log data has been written.        =/
            /=------------------------------------------------=/
            Wait until the log buffers containing the new log
            record have been written.
        ELSE.
        Return log record RBA to caller.
            /=------------------------------------------------=/
            /= Later  when some process wishes to read this log =/
            /= record, that process may use this log record RBA =/
            /= to identify the record to be read.              =/
            /=------------------------------------------------=/
        RETURN.
END LOGWRITE PROCEDURE.
```

TABLE 2    NEWBUF SUBROUTINE OF LOGWRITE PROCEDURE

```
/=------------------------------------------------------------=/
/= NEWBUF Subroutine of LOGWRITE PROCEDURE.                    =/
/=                                                             =/
/=    The log buffers are used in a wrap-around fashion.       =/
/=    Hence before reusing a buffer which contains log data    =/
/=    the write of the buffer to an Active Log data set must   =/
/=    have completed.                                          =/
/=------------------------------------------------------------=/

  NEWBUF SUBROUTINE.
      Increment number of full output buffers by 1.
      IF the next buffer contains unwritten log data THEN
         Wait for buffer write to data set to complete.
      ELSE.
      Initialize the buffer for new output data.
      IF number of full output buffers > threshold THEN
        DO.
           Set number of full output buffers = 0.
           CALL WRITER subroutine.
        END.
      ELSE.
      RETURN.
  END NEWBUF Subroutine.
```

TABLE 3     BLDREC SUBROUTINE OF LOGWRITE PROCEDURE

```
/=---------------------------------------------------------------=/
/= BLDREC Subroutine of LOGWRITE PROCEDURE.                       =/
/=                                                                =/
/=    The caller of LOGWRITE specifies the log record via         =/
/=    a parameter list. The entire log record need not reside     =/
/=    in contiguous storage. In which case the parameter list     =/
/=    designates the storage location and length of each          =/
/=    portion of the record.                                      =/
/=                                                                =/
/=    The length of the log record may exceed the available       =/
/=    space in the current buffer. In which case the              =/
/=    record is segmented with the segments placed in             =/
/=    multiple log buffers. In other words, a 'spanned'           =/
/=    record is created.                                          =/
/=                                                                =/
/=---------------------------------------------------------------=/
BLDREC SUBROUTINE.
     Set pointer to first area pointer in the parameter list.
     Set segment length accumulator = 0.
     DO UNTIL ALL AREAS PROCESSED.
      | IF area will fit in buffer THEN
      |    DO.
      |    | Move area into buffer.
      |    | Accumulate segment length.
      |    | Step to next area pointer.
      |    END.
      | ELSE
      |    DO.
      |    | Fill buffer from area.
      |    | Accumulate segment length.
      |    | Insert accumulated length in segment header.
      |    | IF first segment of record THEN
      |    |   Complete the record header.
      |    | ELSE
      |    |   Complete the segment header.
      |    | CALL NEWBUF SUBROUTINE to set up the next buffer.
      |    | Set segment length accumulator = 0.
      |    END.
     END.
     IF entire record in this buffer THEN
       Complete the record header.
     ELSE
       Show this is the last segment of spanned record.
     Update LMB HIGHEST USED RBA field.
   END BLDREC Subroutine.
```

### TABLE 4    WRITER SUBROUTINE OF LOGWRITE PROCEDURE

```
/=------------------------------------------------------------=/
/= WRITER Subroutine of LOGWRITE PROCEDURE.                   =/
/=                                                            =/
/=   The actual log data set operations are performed by an   =/
/=   ASYNCHRONOUS WRITE function. This subroutine builds a     =/
/=   buffer write request element, places it on the buffer    =/
/=   write queue, and 'resumes' the ASYNCHRONOUS WRITE         =/
/=   function.                                                 =/
/=------------------------------------------------------------=/

WRITER SUBROUTINE.
    Build buffer write request element.
    IF FORCE requested then
      Set 'write to include current buffer' in request element.
    ELSE
      Set 'write up to last filled buffer' in request element.
    IF WAIT for write completion requested.
      DO.
        Set information in request element to cause resume
        of the execution unit, when write completes.
      END.
    ELSE.
    Place request element on ASYNCHRONOUS WRITER queue.
    RESUME the ASYNCHRONOUS WRITER.
END WRITER.
```

TABLE 5    ASYNCHRONOUS WRITER PROCEDURE

```
/=----------------------------------------------------------=/
/= ASYNCHRONOUS WRITER PROCEDURE                            =/
/=----------------------------------------------------------=/

   DO UNTIL Termination.
     SUSPEND THIS EXECUTION UNIT.
     /=********************************************=/
     /=                                           =/
     /= WHILE THIS MODULE HAS NO WORK,            =/
     /= IT REMAINS SUSPENDED AT THIS POINT        =/
     /= WAITING FOR THE NEXT 'RESUME'             =/
     /=                                           =/
     /=********************************************=/
     DO WHILE Buffer Write queue is not empty.
     | Locate request element with highest log RBA.
     | IF highest RBA >= Last log RBA written + 1 THEN
     |   DO.
     |   | Locate next buffer to write.
     |   | IF copy1 Active Log output data set is full THEN
     |   |   DO.
     |   |   | Indicate a copy1 data set is required.
     |   |   | CALL GET_NEXT_ACTIVE_LOG_OUTPUT_DATA_SET.
     |   |   END.
     |   | ELSE.
COPY1WRITE:
     |   |   DO.    /= COPY1WRITE DO          =/
     |   |   | Write the buffer to the copy1 data set.
     |   |   | IF Write error THEN
     |   |   |   DO.
     |   |   |   | Indicate a copy1 data set is required.
     |   |   |   | CALL GET_NEXT_ACTIVE_LOG_OUTPUT_DATA_SET.
     |   |   |   | ITERATE COPY1WRITE.
     |   |   |   END.
     |   |   | ELSE.
     |   |   END.  /= End of COPY1WRITE DO.
     |   | IF dual copy output THEN
     |   |   DO.
     |   |   | IF copy2 Active Log output data set is full
     |   |   |   DO.
     |   |   |   | Indicate a copy2 data set is required.
     |   |   |   | CALL GET_NEXT_ACTIVE_LOG_OUTPUT_DATA_SET.
     |   |   |   END.
     |   |   | ELSE.
COPY2WRITE:
     |   |   | DO.    /= COPY2WRITE DO          =/
     |   |   | | Write the buffer to the copy2 data set.
     |   |   | | IF Write error THEN
     |   |   | |   DO.
     |   |   | |   | Indicate a copy2 data set is required.
     |   |   | |   | CALL GET_NEXT_ACTIVE_LOG_OUTPUT_DATA_SET.
     |   |   | |   | ITERATE COPY2WRITE.
     |   |   | |   END.
     |   |   | | ELSE.
     |   |   | END.  /= End of COPY2WRITE DO.
     |   |   END.    /= End of dual copy output =/
     |   | ELSE.
     |   END.          /= End of write required  =/
     | ELSE.
     | IF there are execution units waiting for this write
     |    operation to complete THEN
     |    DO.
     |    | RESUME each waiting request.
     |    END.
     | ELSE.
     | Free the buffer write request elements which have
     | been processed.
     | Update END-OF-LOG RBA values in the BSDS control record.
     END.      /= End of DO WHILE Queue not empty. =/
   END.          /= End of process until termination loop  =/
 END ASYNCHRONOUS WRITER PROCEDURE.
```

TABLE 6    GET_NEXT_ACTIVE_LOG_OUTPUT_DATA_SET
           SUBROUTINE

```
/=------------------------------------------------------------=/
/= GET_NEXT_ACTIVE_LOG_OUTPUT_DATA_SET Subroutine.         =/
/=                                                          =/
/=    This subroutine updates the Boot-Strap-Data-Set (BSDS) =/
/=    to indicate one data set is full and output has       =/
/=    switched to another data set.                         =/
/=                                                          =/
/=------------------------------------------------------------=/

   SEND MESSAGE: FULL ACTIVE LOG DATA SET.
   Read the 'Active Log Data Set' record from the BSDS.
   Update the BSDS record to show no more data will be
   written in the current (copy1 or copy2 based on input
   parameter) data set.
   /=------------------------------------------------------=/
   /= The BSDS record now shows the LOG RBA range of the =/
   /= data placed in the current data set.               =/
   /=------------------------------------------------------=/
   Select the next Active Log Output Data Set using the
   BSDS record information.
   Update the BSDS record to show the new current output
   data set.
   Write the updated BSDS record to the BSDS.
   IF OFFLOAD option is specified THEN
      INVOKE the OFFLOAD process.
      /=------------------------------------------------=/
      /=   The OFFLOAD process executes asynchronous  =/
      /=   with this process. The 'INVOKE' performs   =/
      /=   the necessary actions to get the OFFLOAD   =/
      /=   process into execution.                    =/
      /=------------------------------------------------=/
   ELSE.
   RETURN.
END GET_NEXT_ACTIVE_LOG_OUTPUT_DATA_SET Subroutine.
```

TABLE 7    OFFLOAD PROCEDURE

```
/=-----------------------------------------------------------=/
/=  OFFLOAD PROCEDURE                                         =/
/=-----------------------------------------------------------=/

OFFLOAD PROCEDURE.
 DO UNTIL no more data sets to OFFLOAD.
 | Allocate a copy1 Archive Log Data Set for output.
 | IF dual Archive data sets specified THEN
 |   Allocate a copy2 Archive Log Data Set.
 | ELSE.
 | Position the Active Log Data Set to be OFFLOADed to
 | the first VSAM Control Interval of log data which has not
 | been previously offloaded.
 | DO WHILE there is data to copy.
 | | Read data from the Active Log Data Set.
 | | IF read error and dual input log exists THEN
 | |   Read data from the alternate Active Log Data set.
 | | Write the data to the Archive Log Data Set(s).
 | END.
 | Close and deallocate the Archive Log Data Set(s).
 | Read the Archive Log Data Set BSDS record.
 | Update the BSDS record to reflect the new Archive Log
 | Data Set(s).
 | Update the 'highest log RBA OFFLOADed value'.
 END.
END OFFLOAD PROCEDURE.
```

TABLE 8A    LOGREAD PROCEDURE (PART A)

```
/=-----------------------------------------------------------=/
/=   LOGREAD PROCEDURE                                        =/
/=-----------------------------------------------------------=/
FINDREC:
DO.  /= Start of FINDREC DO.       =/
  | IF an input log buffer is assigned to this caller THEN
  |   DO.
  |   | IF requested log RBA is in the buffer THEN
  |   |   DO.
  |   |   | Update caller's log-read-position information to
  |   |   | point to the record.
  |   |   | Move the log record into the caller's area.
  |   |   | RETURN.
  |   |   END.
  |   | ELSE
  |   |   DO.
  |   |   | IF requested log RBA is in the log data set
  |   |   |    assigned to this caller THEN
  |   |   |   DO.
  |   |   |   | Read the block containing the requested log
  |   |   |   | RBA from the data set into the input
  |   |   |   | buffer assigned to the caller.
  |   |   |   | Update the input buffer control information to
  |   |   |   | show the log RBA range of the data in the buffer.
  |   |   |   | Update caller's log-read-position information
  |   |   |   | to point to the record.
  |   |   |   | Move the log record into the caller's area.
  |   |   |   | RETURN.
  |   |   |   END.
  |   |   | ELSE
  |   |   |   DO.
  |   |   |   | Release the input log data set assigned to
  |   |   |   | this caller.
  |   |   |   | IF the data set was an Archive Log Data Set
  |   |   |   |    and another process is waiting to use the
  |   |   |   |    data set THEN
  |   |   |   |     RESUME the process waiting for the data set.
  |   |   |   | ELSE.
  |   |   |   | Release the input buffer assigned to this caller.
  |   |   |   END.
  |   |   END.
  |   END.
  | ELSE.
```

TABLE 8B    LOGREAD PROCEDURE (PART B)

```
IF requested log RBA is in the current output log buffers THEN
  DO.
  |  Update caller's log-read-position information to
  |  point to the record.
  |  Move the log record into the caller's area.
  |  RETURN.
  END.
ELSE.
IF requested log RBA is in an Active Log Data Set THEN
  DO.
  |   Allocate an input log buffer to the caller.
  |   Update the caller's log-read-position information to
  |   show the data set and buffer are assigned to the
  |   caller.
  |   ITERATE FINDREC.
  END.
ELSE.
Read the BSDS to determine the Archive Log Data Set
containing the requested log RBA.
IF no data set containing log RBA found THEN
  DO.
  |  Set request completion status to indicate the
  |  requested log RBA does not exist in the log
  |  data sets described by the BSDS.
  |  RETURN.
  END.
ELSE
  DO.
  |  IF the Archive Log Data Set is in use THEN
  |    DO.
  |    |  /=------------------------------------------------=/
  |    |  /= Archive Log Data Sets may reside on tape.    =/
  |    |  /= Only 1 process at a time is permitted to      =/
  |    |  /= use an Archive Log Data Set. This avoids      =/
  |    |  /= inefficent positioning of the tape to         =/
  |    |  /= satisfy requests from multiple processes.     =/
  |    |  /=------------------------------------------------=/
  |    |  Build a queue element requesting use of the
  |    |  Archive Log Data Set.
  |    |  Place the element on the Archive Log Data Set queue.
  |    |  SUSPEND the caller until the data set is available.
  |    END.
  |  ELSE.
  |  Allocate the Archive Log Data Set and an input log
  |  buffer to the caller.
  |  ITERATE FINDREC.
  END.
END.          /= End of FINDREC DO.  =/
```

TABLE 9    PSEUDO CODE PROCEDURE OVERVIEW

```
/=----------------------------------------------------------=/
/=                                                           =/
/=     Data Base System Logging Techniques                   =/
/=                                                           =/
/=----------------------------------------------------------=/
/=                                                           =/
/=   Pseudocode procedures for the following functions were  =/
/=   supplied above:                                         =/
/=                                                           =/
/=     LOGWRITE   - This function is invoked by a log write  =/
/=                  request and runs under the execution unit=/
/=                  of the invoker.                          =/
/=                  It takes a log record described by a log =/
/=                  write parameter list and places it in the=/
/=                  log. The 'log' can be viewed as a        =/
/=                  continuous string of data bytes. This    =/
/=                  function places the new log record at the=/
/=                  end of the data string (log). Associated =/
/=                  with the log record is a 6-byte value    =/
/=                  called the log record's RBA (relative byte=/
/=                  address). This value is the offset from  =/
/=                  the beginning of the continuous byte string=/
/=                  (offset = 0) to the byte position in which=/
/=                  the first byte of this record is placed. =/
/=                                                           =/
/=     ASYNCHRONOUS WRITER - This function runs under its    =/
/=                  own execution unit.                      =/
/=                  It processes a work queue                =/
/=                  whose elements indicate  log output buffers=/
/=                  which need to be written to the Active Log=/
/=                  data sets. This function performs the data=/
/=                  set write operations. When its queue is  =/
/=                  empty, this function SUSPENDs its execution=/
/=                  waiting for new work request elements.   =/
/=                                                           =/
/=     OFFLOAD   - This function runs under its own exeuction=/
/=                  unit. When the ASYNCHRONOUS WRITER function=/
/=                  switches output from one Active Log Data =/
/=                  Set to another, the 'switched from' data =/
/=                  set is available for OFFLOAD. OFFLOAD is =/
/=                  the process of copying the log data from =/
/=                  the disk log (Active Log Data Sets) to   =/
/=                  archival media data sets. Once the data  =/
/=                  has been copied, the Active Log Data Set =/
/=                  may be reused for new log output data.   =/
/=                                                           =/
/=     LOGREAD   - This function reads log records created by=/
/=                  the LOGWRITE function. The caller specifies=/
/=                  the log RBA of the desired record. This  =/
/=                  function locates and returns a copy of the=/
/=                  log record to the caller. This function  =/
/=                  accesses the record from one of the      =/
/=                  following.                                =/
/=                     1. Log output buffers                 =/
/=                     2. An Active Log Data Set             =/
/=                     3. An Archive Log Data Set            =/
/=                  The Boot Strap Data Set (BSDS) contains  =/
/=                  a list of the Active Log and Archive Log =/
/=                  data sets. Associated with each log data =/
/=                  set entry in the BSDS is the log RBA     =/
/=                  range of the data contained in the data set.=/
/=                                                           =/
/=----------------------------------------------------------=/
```

CLAIMS

1.    A method for operating a computing apparatus to enhance the operation of the computing apparatus during recovery from failure, the apparatus including buffer means, storage device means including direct access storage device means and archival storage device means, and program execution means, the method executed under control of said program execution means including the steps of writing log records to said storage device means, said log records including records of changes to a data base and of changes to the state of a system including said computing apparatus, the improved method characterized by the steps of:

assigning to each log record a relative byte address within a continuous address space;

storing said log record in said buffer means;

writing the contents of said buffer means to an active data set on said direct access storage device means;

offloading said active data set to an archive data set on said archival storage device means;

maintaining an index of the relative byte addresses of log records in each active and archive data set; and

responsive to a request specifying the relative byte address of a desired log record, obtaining said desired log record from the first of said buffer means, said direct access storage device means, or said archival storage device means in which it currently resides.

2. The method of claim 1 further characterized by the step of writing the contents of said buffer means to an active data set selectively upon the filling of said buffer means with log records or upon expiration of a predetermined time since the last writing of said buffer means to an active data set.

3. The method of claim 1 further characterized by the step of offloading an active data set to an archive data set upon the filling of an active data set.

4. The method of claim 1 further characterized by maintaining a plurality of copies of said log records in different active and archive data sets.

5. The method of claim 1 wherein said obtaining step is further characterized by the steps of:

searching said buffer means for the desired log record; and if not found

searching said index to identify an active data set containing said desired log record and, if found, loading the desired log record into a read buffer in main storage from the active data set; otherwise,

searching said index to identify an archival data set containing said desired log record and, if found, loading the desired log record into said read buffer from the archival data set.

6. The method of claim 1 further comprising the step of writing a log record as a spanned record into a plurality of active log data sets.

7. A computing apparatus including program execution means, buffer means, storage device means including direct access storage device means and archival storage device means, said program execution means being operable to control the writing of log records to said buffer means and thence to said storage device means,

and a program executable by said program execution means which assigns to each log record a unique relative byte address within a continuous address space, the continuous address space including each of said buffer means, direct access storage device means, and archival storage device means.

8. The computing apparatus of claim 7 in which the program causes said program execution means to periodically write the contents of said buffer means an active log data set on said direct access storage device means, to periodically offload said active log data set to an archival data set on said archival storage device means, and responsive to a request specifying the relative byte address of a desired log record obtains said desired log record from the first of said buffer means, direct access storage device means, or archival storage device means in which said desired log record is located.

ACTIVE
LOG DATA SETS
(VSAM)

30    32    34

OLDEST
LOG RBA

MOST RECENT
LOG RBA

51    52    53    54    55    56

20    22    24    26

40

LOG
OUTPUT
BUFFERS

ARCHIVE
LOG DATA SETS
(QSAM)

FIG.1

131
WRITE
REQUEST
MACRO

101 (TABLES 1-4)
LOG
OUTPUT
PROCESSOR

105 (TABLE 5)
ASYNCH
WRITER

106 (TABLE 6)
OUTPUT
DATA
SET
CONTROL

132
WRITE
REQUEST
MACRO

136
TIMER
TASK

OFFLOAD
TASK

107 (TABLE 7)

138
BSDS
TASK

128 (TABLE 8)
ACTIVE
LOG
READ
TASK

133
LOG
READ
REQUEST

134
LOG
READ
REQUEST

108 (TABLE 8)
LOG
READ
PROCESSOR

118 (TABLE 8)
ARCHIVE
LOG READ
TASK

FIG.4

60

61

```
00000001
00000002
00000003
00000004
00000005
```

BSDS
CONTROL
RECORD

62

COPY 1
ACTIVE

00000002

72
71

63

COPY 2
ACTIVE

00000003

64

COPY 1
ARCHIVE

00000004

Nth
RECORD

65

COPY 2
ARCHIVE

00000005

Nth
RECORD

VSAM
ESDS — 34

VSAM
ESDS — 32

26

QSAM
DATA
SET

66

N-1st
RECORD

68

67

1st
RECORD

69

VSAM
ESDS — 36

24

QSAM
DATA
SET

FIG.2

```
DSNAME
LOW RBA
HIGH RBA
```

FIG.3

FIG.5

FIG.6

270

LOG READ REQUEST

HANDLE RECORDS
```
R003

DETERMINE RBA REQUIRED
CALL R005
LOCATE RECORD IN CI
  POINTED TO BY LRCCI
MOVE RECORD TO CALLER'S
  AREA
RETURN
```
R003

HANDLE CI'S
```
R005

SEARCH OUTPUT
  BUFFERS
IF CI IS FOUND THEN
  SET LRCCI
ELSE
  CALL R006
RETURN
```
R005

HANDLE DATA SETS
```
R006

BUILD LRRB AND BUFFER
SEARCH ACTIVE LDSD CHAINS
IF RBA IS FOUND THEN
  CALL R007
  SET LRCCI
ELSE
  SEARCH ARCHIVES
   THROUGH BSDS
  IF CI IS FOUND THEN
   BUILD ARRB & LDSD
   CALL R008
   SET LRCCI
  ELSE
   SET RETURN CODE
RETURN
```
R006

READ ACTIVE LOG
```
R007

SET UP ACTIVE LOG READ
READ ONE OR MORE CI'S
  INTO LRRB BUFFER
RETURN
```
R007

READ ARCHIVE LOG
```
R008

SET UP ARCHIVE LOG READ
READ BLOCK INTO
  ARRB BUFFER
RETURN
```
R008

FIG.7

RECORD 1 | 0064 | 0000 | 333 | 370

RECORD 2 | 0028 | 0064 | 334

RECORD 3 | 0400 | 0028

RECORD 4 FIRST SEGMENT | 0B5F | 4400 | 335

FF | 0000 0000 | 048C | 00 | 00 0004 4000 | 00 | 00 0FF9 | 0FF9 0000 | 320

341 | OFFSET 342 | LOG RBA 344 | RDF 346 | CIDF 348

RECORD 4 SECOND SEGMENT | 0400 | 8000 | 336

RECORD 5 | 0050 0400

FF

UNUSED

FF | 0000 0000 | 0400 | 00 | 00 0004 5000 | 00 | 00 0FF9 | 0FF9 0000

352 | 354

**FIG.8**

LOG RECORD HEADER 330

331 | 332 | 360 | 362 | 364 | 366 | 368 | 370

| LL0 | PREV | TYPE | STYPE | RM | 0 | URID | LINK | USER DATA |

— BIT 0 ON:      LAST SEGMENT OF SPANNED RECORD
— BIT 1 ON:      FIRST SEGMENT
— BOTH BITS ON:   INTERMEDIATE SPANNED SEGMENT
— BOTH BITS OFF: RECORD NOT SPANNED

— BIT 0 ON:      NULL TO END OF C.I.

**FIG.9**